# EUROPEAN PATENT SPECIFICATION

(11) **EP 4 177 071 B1**
(45) Date of publication and mention of the grant of the patent: **30.04.2025**
(21) Application number: 22189214.4
(22) Date of filing: 08.08.2022
(51) Int. Cl.: B60C 1/00, B60C 11/03, C08K 3/36, B60C 11/00

(54) **PNEUMATIC TIRE**
LUFTREIFEN
PNEUMATIQUE

(30) Priority: 05.11.2021 JP 2021181021
(43) Date of publication of application: 10.05.2023
(73) Proprietor: Sumitomo Rubber Industries, Ltd., Kobe-shi, Hyogo 651-0072 (JP)
(72) Inventor: ONO, Shuichiro, Hyogo, 651-0072 (JP)
(74) Representative: Manitz Finsterwald Patent- und Rechtsanwaltspartnerschaft mbB

(56) References cited:
- EP-A1- 3 254 872
- EP-A1- 4 067 114
- WO-A1-2018/216879
- WO-A1-2019/239570

## Description

### BACKGROUND OF THE INVENTION

### Field of the Invention

The present invention relates to a pneumatic tire and more specifically relates to a pneumatic tire having excellent grip performance on a wet ice road surface.

### Background Art

For running on an ice road surface, spike tires have been used or chains have been mounted onto pneumatic tires (hereinafter, simply referred to as "tires"). However, in recent years, due to environmental problems such as dust, studless tires have been proposed as an alternative to spike tires and chains on pneumatic tires. Since studless tires are used on ice road surfaces having smaller irregularities than general road surfaces, it has been proposed to improve the on-ice performance of the studless tires by modifications in terms of materials and design.

Specifically, as for modifications in terms of materials, for example, it has been proposed to improve the on-ice performance, for example, by blending a large amount of a diene-based rubber or a plasticizer component having excellent low-temperature properties (for example, Japanese Laid-Open Patent Publication No. 2009-091482 and Japanese Laid-Open Patent Publication No. 2019-210488). In addition, as for modifications in terms of design, it has been proposed to improve the on-ice performance, for example, by setting a high land ratio and a low sea ratio (for example, Japanese Laid-Open Patent Publication No. 2018-193056 and Japanese Laid-Open Patent Publication No. 2020-015383). Further tires are known from WO 2018/216879 A1 and EP 4 067 114 A1, where EP 4 067 114 A1 falls under Art. 54(3).

However, the on-ice performance cannot yet be considered to be sufficiently improved by the above-described technologies, and in particular, there is a strong demand for improving grip performance on a wet ice road surface, and further improvements are desired.

The present invention has been made in view of the above circumstances, and an object of the present invention is to provide a pneumatic tire that has sufficiently improved grip performance on a wet ice road surface and exhibits excellent on-ice performance.

### SUMMARY OF THE INVENTION

The present inventor has conducted an intensive study to solve the above problem and has found that the problem can be solved by the disclosure described below.

The present invention is directed to a pneumatic tire according to claim 1.

According to the present invention, it is possible to provide a pneumatic tire that has sufficiently improved grip performance on a wet ice road surface and exhibits excellent on-ice performance.

### DETAILED DESCRIPTION

### [1] Characteristics of Tire

First, the characteristics of the tire will be described.

### 1. Outline

The tire is a pneumatic tire including a tread portion, wherein an outermost layer (cap rubber layer) of the tread portion is formed by using a rubber composition containing vulcanized rubber powder. An area ratio Sr (%) of the vulcanized rubber powder in a cross-section of the outermost layer is not less than 5% and not greater than 50%, and a loss tangent (30°C tanδ) of the rubber composition measured under conditions of 30°C, a frequency of 10 Hz, an initial strain of 5%, and a dynamic strain rate of 1% with deformation mode: tension is greater than 0.20. Furthermore, a sea ratio Se (%) in a ground-contact surface of the outermost layer is greater than 10%, and Sr/Se > 0.1 is satisfied in the outermost layer.

By having these characteristics, as described later, it is possible to provide a pneumatic tire that has sufficiently improved grip performance on a wet ice road surface and exhibits excellent on-ice performance.

### 2. Mechanism for Exhibiting Advantageous Effects in Tire

The mechanism for exhibiting the effect of sufficiently improving grip performance on a wet ice road surface to exhibit excellent on-ice performance in the tire is inferred as follows.

As described above, the cap rubber layer is formed by using the rubber composition containing the vulcanized rubber powder, and the area ratio Sr (%) of the vulcanized rubber powder in the cross-section of the cap rubber layer is not less than 5% and not greater than 50%.

By containing, in the cap rubber layer, the vulcanized rubber powder in a certain amount or more, specifically, such that the area ratio Sr (%) of the vulcanized rubber powder in the cross-section of the cap rubber layer is not less than 5%, it is considered that projections and recesses can be formed on the surface of the tread portion to ensure a drainage path on the surface of the tread portion. In addition, by the vulcanized rubber powder scratching an ice road surface, an anchor effect (biting effect) on the ice road surface can be obtained. Therefore, it is considered that grip performance on an ice road surface can be sufficiently improved and excellent on-ice performance can be exhibited. The area ratio Sr (%) is more preferably not less than 10% and further preferably not less than 20%.

However, when an excessively large amount of the vulcanized rubber powder is contained in the cap rubber layer such that Sr is greater than 50%, reinforcing properties in the cap rubber layer may decrease, causing a decrease in the durability of the tire. Therefore, in the present disclosure, Sr is set to be not greater than 50%. Sr is more preferably not greater than 40% and further preferably not greater than 30%.

The above-described "area ratio Sr of the vulcanized rubber powder" can be obtained, for example, by imaging a sample prepared by cutting the tread portion such that a surface parallel to a tread surface becomes an observation cross-section with a scanning electron microscope, obtaining the area of a domain occupied by the vulcanized rubber powder, and obtaining the ratio of this area to the area of the entire cross-section.

The rubber composition for forming the cap rubber layer is a rubber composition having a loss tangent (30°C tanδ) of greater than 0.20 as measured under conditions of 30°C, a frequency of 10 Hz, an initial strain of 5%, and a dynamic strain rate of 1% with deformation mode: tension.

The loss tangent tanδ is a viscoelastic parameter indicating energy absorption performance, and the higher the value, the more energy can be absorbed and converted into heat. In the present disclosure, since the 30°C tanδ is set to be greater than 0.20 as described above, this conversion into heat can be sufficiently performed. As a result, during running, the cap rubber layer is easily warmed up, and the temperatures of the projections of the vulcanized rubber powder on the surface of the cap rubber layer become relatively higher, so that it is considered that an anchor effect on an ice road surface is easily obtained. The 30°C tanδ is more preferably not less than 0.22 and further preferably not less than 0.24. In addition, the upper limit of the 30°C tanδ is not particularly limited, but the 30°C tanδ is preferably less than 0.30.

The above-described loss tangent (tanδ) can be measured, for example, by using a viscoelasticity measurement device such as "EPLEXOR (registered trademark)" manufactured by NETZSCH-Gerätebau GmbH.

Moreover, the sea ratio Se (%) in the ground-contact surface of the cap rubber layer is set to be greater than 10%, and Sr/Se > 0.1 is satisfied.

The sea ratio can be considered as a parameter indicating the degree to which the drainage path is ensured during running. When the sea ratio Se is set to be greater than 10%, many grooves are formed on the tread portion, and a large drainage path is ensured, so that a sufficient drainage path can be ensured.

However, when the sea ratio Se is simply increased, the contact area with a road surface is decreased. Therefore, after a water film formed on the road surface is eliminated, a sufficient ground-contact area cannot be obtained, so that there is a possibility that on-ice performance cannot be obtained.

The present inventor has considered that when the area ratio Sr of the vulcanized rubber powder is increased as the sea ratio Se increases, even if the contact area with a road surface becomes smaller, biting into an ice road surface is possible by the projections and the recesses of the vulcanized rubber powder on the surface of the tread portion, so that a water film on the ice road surface can be appropriately eliminated and drained, and a sufficient anchor effect can be obtained. Then, as a result of various experiments and studies, the present inventor has found that it is sufficient that Sr/Se > 0.1 is satisfied. Sr/Se is more preferably not less than 0.5 and further preferably not less than 1.0. The upper limit of Sr/Se is not particularly limited, but Sr/Se is preferably not greater than 1.5.

The above-described sea ratio Se can be obtained from a ground-contact shape under conditions of a normal rim, a normal internal pressure, and a normal load.

Specifically, the tire is fitted onto the normal rim, the normal internal pressure is applied to the tire, and the tire is allowed to stand for 24 hours at 25°C. Then, the tire tread surface is painted with black ink, and is pressed against thick paper with the normal load applied (the camber angle is 0°) to perform transfer to the paper, whereby a ground-contact shape can be obtained. Therefore, the tire is rotated in steps of 72° in the circumferential direction, and transfer is performed at five locations. That is, a ground-contact shape is obtained five times. Then, at the outermost part of each ground-contact shape, the portions interrupted by main grooves and lateral grooves are smoothly connected to obtain the contour of the ground-contact shape. The ratio of the average of the areas of the portions (white portions) in the above-described contour of the ground-contact shape that are not transferred to the base paper due to the grooves, to the average of the total area of the contour of the ground-contact shapes, is obtained, and this value is multiplied by 100, whereby the sea ratio Se (%) can be obtained.

Here, the "normal rim" is a rim that is defined, in a standard system including a standard on which the tire is based, by the standard for each tire, and refers to, for example, the standard rim at an applicable size described in "JATMA YEAR BOOK" in the JATMA (Japan Automobile Tyre Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "normal rim" refers to the rim having the smallest rim diameter, and, next to this, refers to the rim having the smallest rim width, among rims to which the tire can be fitted and which allow the internal pressure of the tire to be maintained, that is, rims that do not cause air leakage from between the rim and the tire.

The "normal internal pressure" is an air pressure that is defined by the standard for each tire, and refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

Moreover, the "normal load" is a load that is defined for each tire by each standard in a standard system including a standard on which the tire is based, refers to the maximum mass that is permitted to be applied to the tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

As described above, by increasing Se to cause grooves to exist sufficiently, water on an ice road surface is caused to escape from the surface of the tread portion to the grooves, and Sr/Se is increased to cause the projections and the recesses of the vulcanized rubber powder on the surface of the tread portion to bite into an ice road surface, whereby grip performance can be sufficiently improved even on a wet ice road surface, and excellent on-ice performance can be exhibited.

One or more base rubber layers may be provided below the cap rubber layer.

### [2] More Preferable Mode of Tire

The tire can achieve a greater effect by taking the following mode.

### 1. Relationship between Sr and Se

By increasing the area ratio Sr of the vulcanized rubber powder in the cross-section of the cap rubber layer as the sea ratio Se increases as described above, the tire according to the present disclosure can bite into an ice road surface and can exhibit excellent on-ice performance. In this case, it is preferable that Sr×Se > 500 is satisfied.

When both Sr and Se are sufficiently increased as described above, the above-described effect by Sr and the above-described effect by Se can cooperate to further improve grip performance, so that more excellent on-ice performance can be exhibited.

### 2. Relationship between 30°C tanδ and Se

The 30°C tanδ and Se preferably have a certain balance. As described above, as Se increases, a more sufficient drainage path can be ensured, but it is more difficult to obtain an anchor effect on an ice road surface. On the other hand, as the value of the 30°C tanδ increases, the temperature of the vulcanized rubber powder on the surface of the rubber composition can be increased, so that it is easier to obtain an anchor effect on an ice road surface.

Therefore, as for the relationship between the 30°C tanδ and Se, as a result of experiments and studies, it is found that if the ratio (%) of the 30°C tanδ to Se, that is, (30°C tanδ/Se)×100, is greater than 0.50 and less than 1.0, both a sufficient drainage function and a sufficient anchor effect are properly achieved, and excellent on-ice performance can be exhibited. This ratio (%) is more preferably not less than 0.55 and not greater than 0.65.

### 3. Particle Size of Vulcanized Rubber Powder

The vulcanized rubber powder preferably has a particle size finer than 30 mesh pass and coarser than 250 mesh pass obtained through a test sieve specified in JIS Z8801-1. When the particle size is set to be coarser than 250 mesh pass, the above-described anchor effect on an ice road surface can be sufficiently exhibited. On the other hand, when the particle size is set to be finer than 30 mesh pass, it becomes easier to achieve uniform dispersion in the rubber composition for forming the cap rubber layer, and it is possible to easily achieve sufficient durability.

### 4. Containing Silica in Cap Rubber Layer

The cap rubber layer preferably contains silica as a reinforcing agent. When silica is contained, the above-described 30°C tanδ can be larger with respect to an increase in hardness than when another reinforcing agent is contained, so that it is considered that the cap rubber layer is more easily warmed up without impairing the followability of the cap rubber layer to a road surface, and the anchor effect on an ice road surface is improved.

As for the silica, since the processability is deteriorated if the average primary particle diameter of the silica is excessively small, large-particle-diameter silica having an average primary particle diameter of greater than 16 nm is preferably used. The average primary particle diameter is more preferably not less than 25 nm and further preferably not less than 30 nm. On the other hand, from the viewpoint of ensuring reinforcing properties of rubber, the average primary particle diameter is preferably not greater than 60 nm, more preferably not greater than 55 nm, and further preferably not greater than 50 nm.

The average primary particle diameter of the silica means the average of values obtained by observing the smallest particle unit of the silica forming an aggregation structure and measuring the absolute maximum length of the smallest particle as the diameter of a circle, and can be obtained as the average of measurements of 400 or more primary particles of the silica observed in the field of view when the silica is observed with a transmission or scanning electron microscope.

In this case, when the vulcanized rubber powder also contains silica, further improvement of the 30°C tanδ can be expected, but the contribution to the improvement of the 30°C tanδ is larger for the rubber other than the vulcanized rubber powder than for the vulcanized rubber powder. Therefore, the silica content of the rubber other than the vulcanized rubber powder is preferably higher than that of the vulcanized rubber powder.

### [3] Embodiment

Hereinafter, the present invention will be specifically described based on an embodiment.

### 1. Rubber Composition for forming Cap Rubber Layer

### (1) Blending Materials

A rubber composition for forming the cap rubber layer can be obtained from a rubber component and other blending materials described below, excluding the vulcanized rubber powder.

### (a) Rubber Component

The rubber component is not particularly limited, and rubbers (polymers) generally used in the production of tires, such as isoprene-based rubbers, diene-based rubbers such as butadiene rubber (BR), styrene-butadiene rubber (SBR), and nitrile rubber (NBR), and butyl-based rubbers such as isobutylene-isoprene-rubber, can be used. Among them, an isoprene-based rubber (especially NR) and a diene-based rubber (especially BR) are preferably used in combination.

### (I) Isoprene-Based Rubber

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

From the viewpoint of on-ice performance, etc., the amount of the isoprene-based rubber in 100 parts by mass of the rubber component is preferably not less than 30 parts by mass and more preferably not less than 35 parts by mass. On the other hand, as for the upper limit of the amount of the isoprene-based rubber, the amount of the isoprene-based rubber is preferably not greater than 50 parts by mass and more preferably not greater than 45 parts by mass.

### (II) BR

From the viewpoint of on-ice performance, etc., as the rubber component, BR is preferably used together with NR. The amount of the BR is not particularly limited, but is preferably not less than 50 parts by mass and more preferably not less than 55 parts by mass. On the other hand, the amount of the BR is preferably not greater than 70 parts by mass and more preferably not greater than 65 parts by mass.

The weight-average molecular weight of the BR is, for example, greater than 100 thousand and less than 2 million. The vinyl bond content (1,2-bond butadiene unit content) of the BR is, for example, greater than 1% by mass and less than 30% by mass. The cis content of the BR is, for example, greater than 1% by mass and not greater than 98% by mass. The trans content of the BR is, for example, greater than 1% by mass and less than 60% by mass. The cis content can be measured by infrared absorption spectrometry.

The BR is not particularly limited, and a BR having a high cis content (a cis content of 90% or higher), a BR having a low cis content, a BR containing syndiotactic polybutadiene crystals (SPB-containing BR), etc., can be used. The BR may be either an unmodified BR or a modified BR, and, for example, an S-modified BR modified with a compound (modifier) represented by the following formula can be used as the modified BR.

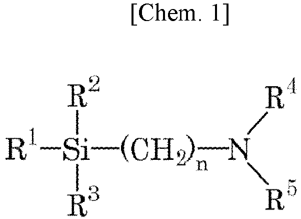

In the formula, R¹, R², and R³ are the same or different from each other, and each represent an alkyl group, an alkoxy group, a silyloxy group, an acetal group, a carboxyl group (-COOH), a mercapto group (-SH), or a derivative thereof. R⁴ and R⁵ are the same or different from each other, and each represent a hydrogen atom or an alkyl group. R⁴ and R⁵ may be linked together to form a ring structure together with a nitrogen atom. "n" represents an integer.

An example of the modified BR modified with the compound (modifier) represented by the above formula is a BR obtained by modifying polymerization terminals (active terminals) with the compound represented by the above formula.

As R¹, R², and R³, an alkoxy group is suitable (an alkoxy group preferably having 1 to 8 carbon atoms, more preferably 1 to 4 carbon atoms). As R⁴ and R⁵*,* an alkyl group (preferably, an alkyl group having 1 to 3 carbon atoms) is suitable. The integer "n" is preferably not less than 1 and not greater than 5, more preferably not less than 2 and not greater than 4, and further preferably 3. In addition, when R⁴ and R⁵ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified BR, a modified BR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method.

As the modified BR, for example, a tin-modified BR can also be used. As the tin-modified BR, a BR obtained by polymerizing 1,3-butadiene with a lithium initiator and then adding a tin compound to the polymerized 1,3-butadiene and in which the terminals of the modified BR molecules are bound to each other through tin-carbon bonds, is preferable.

Examples of the lithium initiator include lithium-based compounds such as alkyl lithiums, aryl lithiums, vinyl lithium, organotin lithium, and organic nitrogen lithium compounds, and lithium metal. A tin-modified BR with a high vinyl content and a low cis content can be manufactured using the lithium initiator as an initiator for the tin-modified BR.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraaryltin, and p-tributyltin styrene.

The content of tin atoms in the tin-modified BR is preferably not less than 50 ppm and more preferably not less than 60 ppm. On the other hand, the content of tin atoms is preferably not greater than 3000 ppm, more preferably not greater than 2500 ppm, and further preferably not greater than 250 ppm.

The molecular weight distribution (Mw/Mn) of the tin-modified BR is preferably not greater than 2 and more preferably not greater than 1.5.

The vinyl bond content of the tin-modified BR is preferably not less than 5% by mass and more preferably not less than 7% by mass. On the other hand, the vinyl bond content of the tin-modified BR is preferably not greater than 50% by mass and more preferably not greater than 20% by mass.

The above S-modified BRs or tin-modified BRs may be used individually, or two or more of the above S-modified BRs or tin-modified BRs may be used in combination.

As the BR, for example, products of UBE Corporation, JSR Corporation, Asahi Kasei Corporation, Zeon Corporation, etc., can be used.

### (III) SBR

The rubber component may further contain SBR as necessary. When the SBR is contained in the rubber component, a domain portion is formed in the rubber component by the styrene moiety, so that it is considered that a scratching effect is easily obtained. In addition, the temperature of the vulcanized rubber powder portion is easily increased by heat generation of the styrene moiety, so that it is considered that on-ice performance is easily improved. The amount of the SBR in 100 parts by mass of the rubber component is preferably not less than 5 parts by mass and more preferably not less than 10 parts by mass. The upper limit of the amount of the SBR is not particularly limited, but the amount of the SBR is preferably not greater than 20 parts by mass and more preferably not greater than 15 parts by mass.

The weight-average molecular weight of the SBR is, for example, greater than 100 thousand and less than 2 million. The styrene content of the SBR is preferably not less than 5% by mass and particularly preferably not less than 8% by mass. In addition, the styrene content of the SBR is preferably less than 35% by mass, more preferably less than 25% by mass, and further preferably less than 15% by mass. The vinyl bond content (1,2-bond butadiene unit content) of the SBR with respect to the butadiene moiety of the SBR is, for example, preferably greater than 5% by mole, more preferably greater than 10% by mole, and further preferably greater than 15% by mole. On the other hand, as for the upper limit of the vinyl bond content, the vinyl bond content is preferably less than 70% by mole, more preferably less than 40% by mole, and further preferably less than 30% by mole. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR, and these SBRs may be used individually, or two or more of these SBRs may be used in combination.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

As the SBR, for example, SBRs manufactured by and available from SUMITOMO CHEMICAL COMPANY, LIMITED, JSR Corporation, Asahi Kasei Corporation, Zeon Corporation, etc., can be used. These SBRs may be used individually, or two or more of these SBRs may be used in combination.

### (IV) Other Rubber Component

Moreover, as another rubber component, a rubber (polymer) generally used in the production of tires, such as nitrile rubber (NBR), may be contained as necessary.

### (b) Blending Materials Other Than Rubber Component

### (I) Filler

In the present embodiment, the rubber composition preferably contains a filler. Specific examples of the filler include silica, carbon black, graphite, calcium carbonate, talc, alumina, clay, aluminum hydroxide, and mica. Among them, silica is preferably contained in combination with a silane coupling agent, and carbon black may be further contained as necessary.

The total blending amount of the filler per 100 parts by mass of the rubber component is preferably not less than 50 parts by mass, more preferably not less than 60 parts by mass, and further preferably not less than 70 parts by mass. On the other hand, from the viewpoint of dispersibility in the rubber composition, the total blending amount of the filler is preferably not greater than 170 parts by mass, more preferably not greater than 130 parts by mass, and further preferably not greater than 90 parts by mass.

### (i) Silica

The rubber composition preferably contains silica. Among silicas, from the viewpoint of on-ice performance, etc., for example, large-particle-diameter silica having an average primary particle diameter of greater than 16 nm is more preferably contained. The BET specific surface area of the large-particle-diameter silica is preferably greater than 100 m²/g and more preferably greater than 130 m²/g. On the other hand, the BET specific surface area of the large-particle-diameter silica is preferably less than 250 m²/g and more preferably less than 200 m²/g. The above BET specific surface area is a value of N₂SA measured by the BET method according to ASTM D3037-93.

Examples of the silica include dry-process silica (anhydrous silica) and wet-process silica (hydrous silica). Between them, wet-process silica is preferable for the reason that it has a higher silanol group content. In addition, silica using hydrous glass or the like as a raw material, silica using a biomass material such as rice husks as a raw material, etc., may be used. As described above, large-particle-diameter silica is preferably used.

As the silica, for example, products of Evonik Industries Ag, Rhodia, Tosoh Silica Corporation, Solvay Japan, Ltd., Tokuyama Corporation, etc., can be used.

From the viewpoint of improvement of on-ice performance, the amount of the silica per 100 parts by mass of the rubber component is preferably not less than 50 parts by mass, more preferably not less than 60 parts by mass, and further preferably not less than 70 parts by mass. On the other hand, from the viewpoint of dispersibility in the rubber composition, the amount of the silica is preferably not greater than 170 parts by mass, more preferably not greater than 130 parts by mass, and further preferably not greater than 90 parts by mass.

### (ii) Silane Coupling Agent

When using silica, a silane coupling agent is preferably used together. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, DuPont Toray Specialty Materials K.K., etc., can be used.

The amount of the silane coupling agent per 100 parts by mass of the silica is, for example, greater than 3 parts by mass and less than 15 parts by mass.

### (iii) Carbon Black

The rubber composition preferably contains carbon black as necessary. From the viewpoint of improvement of on-ice performance and reinforcing properties, the amount of the carbon black per 100 parts by mass of the rubber component is, for example, preferably not less than 1 part by mass, more preferably not less than 3 parts by mass, and further preferably not less than 5 parts by mass. On the other hand, from the viewpoint of the processability of the rubber composition, the amount of the carbon black is preferably not greater than 20 parts by mass, more preferably not greater than 15 parts by mass, and further preferably not greater than 10 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. One of these carbon blacks may be used alone, or two or more of these carbon blacks may be used in combination.

The nitrogen adsorption specific surface area (N₂SA) of the carbon black is, for example, greater than 30 m²/g and less than 250 m²/g. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used individually, or two or more of these carbon blacks may be used in combination.

### (iv) Other Filler

In addition to the above-described silica and carbon black, the rubber composition may contain fillers generally used in the tire industry, such as graphite, calcium carbonate, talc, alumina, clay, aluminum hydroxide, mica, and magnesium sulfate. The amount of each of these fillers per 100 parts by mass of the rubber component is, for example, greater than 0.1 parts by mass and less than 150 parts by mass.

### (II) Vulcanized rubber powder

As described above, the rubber composition contains vulcanized rubber powder. As the vulcanized rubber powder, commercially available vulcanized rubber powder obtained by crushing used tires with a roll machine, a grinder, or the like and then sieving the crushed matter to a predetermined particle diameter may be used, but vulcanized rubber powder obtained by vulcanizing, crushing, and sieving a separately formulated rubber composition may be used as necessary. As described above, the particle size of the vulcanized rubber powder is preferably a particle size finer than 30 mesh pass and coarser than 50 mesh pass obtained through a test sieve specified in JIS Z8801-1.

As described above, containing the vulcanized rubber powder may decrease the reinforcing properties of the tire, which may lead to a decrease in the durability of the tire. Therefore, the amount of the vulcanized rubber powder per 100 parts by mass of the rubber component is, for example, preferably not less than 5 parts by mass, more preferably not less than 20 parts by mass, and further preferably not less than 40 parts by mass. On the other hand, the amount of the vulcanized rubber powder is preferably not greater than 100 parts by mass, more preferably not greater than 90 parts by mass, and further preferably not greater than 80 parts by mass.

### (III) Plasticizer Component

In the rubber composition, a plasticizer component is preferably used as necessary. The amount of the plasticizer component per 100 parts by mass of the rubber component is preferably not less than 20 parts by mass, more preferably not less than 30 parts by mass, and further preferably not less than 40 parts by mass. On the other hand, the upper limit of the amount of the plasticizer component is not particularly limited, but the amount of the plasticizer component is preferably not greater than 70 parts by mass, more preferably not greater than 60 parts by mass, and further preferably not greater than 50 parts by mass. Accordingly, during mixing, the vulcanized rubber powder can be appropriately dispersed. Here, the plasticizer component refers to a component that plasticizes the rubber composition, such as process oil, extender oil of the rubber component, liquid rubber, and a resin component.

### (i) Oil

Examples of the oil include mineral oils (generally called process oils), vegetable fats and oils, and mixtures thereof. As the mineral oil (process oil), for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination. In addition, as these oils, from the viewpoint of life cycle assessment, lubricating oil that has been used for mixers such as a rubber mixing machine, engines, etc., waste cooking oil that has been used in restaurants and the like, etc., may be refined and used as appropriate.

As the specific process oil (mineral oil), for example, products of Idemitsu Kosan Co., Ltd., Sankyo Yuka Kogyo K.K., ENEOS Corporation, Olisoy, H&R, Hokoku Corporation, Idemitsu Kosan Co.,Ltd., FUJI KOSAN COMPANY, LTD., etc., can be used.

### (ii) Liquid Rubber

The liquid rubber is a polymer in a liquid state at room temperature (25°C), and is a rubber component that can be extracted from the tire after vulcanization, by extraction with acetone. Examples of the liquid rubber include a farnesene-based polymer, a liquid diene-based polymer, and hydrogenated products thereof.

The farnesene-based polymer is a polymer obtained by polymerizing farnesene, and has a structural unit based on farnesene. As farnesene, there are isomers such as α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer), or a copolymer of farnesene and a vinyl monomer (farnesene-vinyl monomer copolymer).

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw), of greater than 1.0×10³ and less than 2.0×10⁵*,* measured by gel permeation chromatography (GPC) in terms of polystyrene. In the present description, the Mw of the liquid diene-based polymer is a value that is measured by gel permeation chromatography (GPC) and obtained by polystyrene conversion.

The amount of the liquid rubber (total amount of a liquid farnesene-based polymer, a liquid diene-based polymer, etc.) per 100 parts by mass of the rubber component is, for example, greater than 1 part by mass and less than 100 parts by mass.

As the liquid rubber, for example, products of KURARAY CO., LTD., Cray Valley, etc., can be used.

### (iii) Resin Component

The resin component also functions as an adhesiveness imparting component, and may be solid or liquid at room temperature. Specific examples of the resin component include rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably greater than 2 parts by mass and less than 45 parts by mass, and more preferably less than 30 parts by mass.

The rosin-based resins refer to resins that are obtained by processing pinene resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and α, β-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of (C₅H₈)ₙ and oxygenated derivatives thereof, and are compounds having, as a basic backbone, a terpene classified into monoterpene (C₁₀H₁₆), sesquiterpene (C₁₅H₂₄), diterpene (C₂₀H₃₂), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene (AMS resin) or styrene or a copolymer of α-methylstyrene and styrene is preferable, and a copolymer of α-methylstyrene and styrene is more preferable, for the reasons that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Group Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present disclosure, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., ENEOS Corporation, Arakawa Chemical Industries, Ltd., Taoka Chemical Co., Ltd., etc., can be used.

### (IV) Wax

The rubber composition preferably contains a wax. The amount of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

### (V) Antioxidant

The rubber composition preferably contains an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

### (VI) Lubricant

The rubber composition may contain a lubricant. As the lubricant, a lubricant based on a fatty acid derivative such as stearic acid is preferable, and specifically, as stearic acid, for example, products of NOF Corporation, Kao Corporation, FUJIFILM Wako Pure Chemical Corporation, New Japan Chemical Co., Ltd., etc., can be used, and Struktol WB16 manufactured by Struktol Company of America, etc., can also be used. The amount of the lubricant per 100 parts by mass of the rubber component is preferably not less than 0.1 parts by mass and not greater than 3 parts by mass, more preferably not less than 0.5 parts by mass and not greater than 2.5 parts by mass, and further preferably not less than 1.0 part by mass and not greater than 2.0 parts by mass.

### (VII) Zinc Oxide

The rubber composition may contain zinc oxide. The amount of the zinc oxide per 100 parts by mass of the rubber component is, for example, greater than 0.5 parts by mass and less than 15 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

### (VIII) Crosslinking Agent and Vulcanization Accelerator

The rubber composition preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

### (IX) Others

In addition to the above-described components, additives generally used in the tire industry, such as fatty acid metal salts, carboxylic acid metal salts, and organic peroxides may be further blended in the rubber composition. The amount of each of these additives per 100 parts by mass of the rubber component is, for example, greater than 0.1 parts by mass and less than 200 parts by mass.

### (2) Production of Rubber Composition

The rubber composition is produced by a general method; for example, a production method including a base kneading step of kneading a rubber component, granulated rubber powder, and a filler such as silica and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a plasticizer such as an oil, stearic acid, zinc oxide, an antioxidant, a wax, a vulcanization accelerator, etc., may be appropriately added and kneaded as necessary.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be appropriately added and kneaded as necessary.

Then, the obtained rubber composition is extruded into a predetermined shape to be molded into a tread.

### 2. Production of Tire

The tire can be produced as an unvulcanized tire through shaping on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire to a rim, shaping these members into a toroid shape, then attaching a tread to a center portion of the outer periphery, and attaching sidewalls on the radially outer side to form side portions.

Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.

As described above, the obtained tire has sufficiently improved grip performance on a wet ice road surface, and therefore can exhibit excellent on-ice performance.

### EXAMPLES

Hereinafter, the present invention will be further specifically described by means of examples. In the following, tires having a size of 205/55R16 were produced and evaluated for on-ice performance.

### 1. Production of Rubber Composition

Prior to tire production, first, a rubber composition for forming a cap rubber layer was produced.

(1) Blending Materials

First, each blending material described below was prepared.
(a) Rubber Component
   (I) NR: TSR20
   (II) BR: BR730 manufactured by JSR Corporation
(b) Blending Materials Other Than Rubber Component
   (I) Carbon black: DIABLACK N220 manufactured by Mitsubishi Chemical Corporation
      (N₂SA: 115 m²/g)
   (II-1) Silica-1: ULTRASIL VN3 manufactured by Evonik Industries Ag (N₂SA: 175 m²/g, average primary particle diameter: 17 nm)
   (II-2) Silica-2: Zeosil 1115MP manufactured by Rhodia (N₂SA: 115 m²/g, average primary particle diameter: 25 nm)
   (III) Silane coupling agent: Si266 manufactured by Evonik Industries Ag (bis(3-triethoxysilylpropyl)disulfide)
   (IV) Vulcanized rubber powder: vulcanized rubber powder having a silica content of 40 wt% (see the next section (c) for the production method).
   (V) Oil: process oil A/OMIX manufactured by Sankyo Yuka Kogyo K.K.
   (VI) Wax: OZOACE 0355 manufactured by NIPPON SEIRO CO., LTD.
   (VII) Antioxidant: NOCRAC 6C manufactured by Ouchi Shinko Chemical Industrial Co., Ltd.
      (N-phenyl-N'-(1,3-dimethylbutyl)-p-phenylenediamine)
   (VIII) Stearic acid: stearic acid "Camellia" manufactured by NOF Corporation
   (IX) Zinc oxide: Zinc Oxide Type-1 manufactured by Mitsui Mining & Smelting Co., Ltd.
   (X) Crosslinking agent and vulcanization accelerator
      Sulfur: powdery sulfur manufactured by Tsurumi Chemical Industry Co., Ltd.
      Vulcanization accelerator-1: NOCCELER CZ-G (CBS) manufactured by Ouchi Shinko Chemical Industrial Co., Ltd.
         (N-cyclohexyl-2-benzothiazolyl sulfenamide)
      Vulcanization accelerator-2: NOCCELER D (DPG) manufactured by Ouchi Shinko Chemical Industrial Co., Ltd.
         (1,3-diphenylguanidine)
(c) Production of Vulcanized Rubber Powder

The above-described vulcanized rubber powder was produced according to the following procedure.

First, a kneaded product was obtained by kneading the materials other than the sulfur and the vulcanization accelerators under a condition of 150°C for 5 minutes by using a Banbury mixer in accordance with a blending formula shown in Table 1, then adding the sulfur and the vulcanization accelerators, and kneading the mixture under a condition of 80°C for 5 minutes by using an open roll. The unit of each blending amount is parts by mass.

Next, the obtained kneaded product was vulcanized under a condition of 170°C for 20 minutes to obtain a rubber plate. Then, the obtained rubber plate was roll-crushed and sieved through a 30-mesh sieve, thereby obtaining vulcanized rubber powder having a silica content of 40 wt%.

**[Table 1]**

| | Blending amount |
|---|---|
| SBR | 50 |
| NR | 30 |
| BR | 20 |
| Carbon black | 5 |
| Silica-1 | 82 |
| Silane coupling agent | 8.2 |
| Zinc oxide | 2.4 |
| Stearic acid | 1.5 |
| Sulfur | 1.5 |
| Vulcanization accelerator-1 | 2 |
| Vulcanization accelerator-2 | 1 |

### (2) Production of Rubber Composition for Forming Cap Rubber Layer

A kneaded product was obtained by kneading the materials other than the sulfur and the vulcanization accelerators under a condition of 150°C for 5 minutes by using a Banbury mixer in accordance with each of blending formulas shown in Table 2 and Table 3. The unit of each blending amount is parts by mass.

Next, the sulfur and the vulcanization accelerators were added to the obtained kneaded product, and the mixture was kneaded under a condition of 80°C for 5 minutes by using an open roll, to obtain each rubber composition for forming a cap rubber layer.

### 2. Production of Cap Rubber and Tire

The obtained respective rubber compositions for forming a cap rubber layer were extruded into a predetermined shape as cap rubbers, and then tread portions were produced by using the obtained cap rubbers, and were attached together with other tire members to form unvulcanized tires. Then, the unvulcanized tires were press-vulcanized under a condition of 170°C for 10 minutes to produce test tires of Example 1 to Example 6 and Comparative Example 1 to Comparative Example 10.

### 3. Calculation of Parameters

Next, each of the following parameters was obtained for each of the obtained test tires.

### (1) Sea Ratio Se

The sea ratio was measured according to the method described in "Mechanism for Exhibiting Advantageous Effects in Tire According to Present Disclosure" described above.

### (2) Area Ratio Sr of Vulcanized Rubber Powder

First, an observation sample was cut out from the cap rubber layer of each test tire such that a surface parallel to the tread surface became an observation cross-section.

Next, the observation cross-section of the sample was imaged by using a scanning electron microscope (Teneo manufactured by Thermo Fisher) at an acceleration voltage of 15 kV to obtain an electron microscope image at a magnification of 50 times.

Next, the area of the domain corresponding to the vulcanized rubber powder was calculated in a range of 2.54 mm × 1.69 mm of the obtained electron microscope image, and the ratio of the area of the domain to the area of the entire cross-section was calculated. This was performed in three visual fields per sample, and the average value of the calculated ratios was regarded as the area ratio Sr (%) of the vulcanized rubber powder.

The results are shown in Table 2 and Table 3. For the test tires for which the same blending formula was used, the same measurement was performed on each tire, and the obtained results were averaged again to obtain the area ratio of the vulcanized rubber powder for each blending formula.

### (3) Loss Tangent

A rubber test piece for measurement was prepared by cutting out a piece from the cap rubber layer of each test tire in a length of 20 mm × a width of 4 mm × a thickness of 1 mm such that the tire circumferential direction was the direction of the long side. For each rubber test piece, a loss tangent (30°C tanδ) was measured, using EPLEXOR series manufactured by NETZSCH-Gerätebau GmbH, under the conditions of 30°C, a frequency of 10 Hz, an initial strain of 5%, and a dynamic strain rate of 1% with deformation mode: tension.

The results are shown in Table 2 and Table 3. For the test tires for which the same blending formula was used, the same measurement was performed on each tire, and the obtained results were averaged to obtain 30°C tanδ for each blending formula.

Next, Sr/Se, Sr×Se, and 30°C tanδ/Se were calculated by using the measured values of Se, Sr, and the 30°C tanδ. The results are shown in Table 2 and Table 3.

### 4. Performance Evaluation (On-Ice Performance)

The respective test tires were mounted to all the wheels of vehicles (rear wheel drive vehicles produced in Japan and having an engine displacement of 2000 cc), and filled with air such that the internal pressure of the front wheels was 230 kPa and the internal pressure of the rear wheels was 220 kPa. Then, each vehicle was caused to run at a speed of 30 km/h on an ice road surface with water sprayed on the ice road surface at an outside temperature of 0 to -5°C, and the stop distance on the wet ice road surface required until the vehicle stopped when the locking brake was depressed was measured.

For the evaluation, the stop distance of each test tire was indexed based on the following equation with the stop distance of Comparative Example 1 being regarded as 100. A higher value indicates that the on-ice performance is better. The results are shown in Table 2 and Table 3. On-ice performance = (stop distance of Comparative Example 1/stop distance of test tire)×100

**[Table 2]**

| | Ex. 1 | Ex. 2 | Ex. 3 | Ex. 4 | Ex. 5 | Ex. 6 |
|---|---|---|---|---|---|---|
| (Blending formula) | | | | | | |
| NR | 40 | 40 | 40 | 40 | 40 | 40 |
| BR | 60 | 60 | 60 | 60 | 60 | 60 |
| Carbon black | 5 | 5 | 5 | 5 | 5 | 5 |
| Silica-1 | 65 | 65 | 65 | 65 | 0 | 0 |
| Silica-2 | 0 | 0 | 0 | 0 | 72.5 | 80 |
| Silane coupling agent | 6.5 | 6.5 | 6.5 | 6.5 | 7.25 | 8 |
| Vulcanized rubber powder | 8 | 20 | 45 | 75 | 20 | 20 |
| Oil | 35 | 35 | 35 | 35 | 40 | 45 |
| Wax | 2 | 2 | 2 | 2 | 2 | 2 |
| Antioxidant | 2 | 2 | 2 | 2 | 2 | 2 |
| Stearic acid | 2 | 2 | 2 | 2 | 2 | 2 |
| Zinc oxide | 2 | 2 | 2 | 2 | 2 | 2 |
| Sulfur | 1 | 1 | 1 | 1 | 1 | 1 |
| Accelerator-1 | 2 | 2 | 2 | 2 | 2 | 2 |
| Accelerator-2 | 2 | 2 | 2 | 2 | 2 | 2 |

| (Parameter) | | | | | | |
|---|---|---|---|---|---|---|
| Sr (%) | 5.3 | 13.3 | 29.9 | 49.9 | 21.5 | 21.5 |
| 30°C tanδ | 0.21 | 0.21 | 0.22 | 0.23 | 0.24 | 0.25 |
| Se (%) | 40 | 40 | 40 | 40 | 40 | 40 |
| Sr/Se | 0.13 | 0.33 | 0.75 | 1.25 | 0.54 | 0.54 |
| Sr×Se | 213 | 532 | 1196 | 1994 | 861 | 861 |
| (30°C tanδ/Se)*100 | 0.525 | 0.525 | 0.55 | 0.575 | 0.6 | 0.625 |

| (Performance evaluation) | | | | | | |
|---|---|---|---|---|---|---|
| On-ice performance | 107 | 112 | 123 | 139 | 116 | 121 |

**[Table 3]**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|
| (Blending formula) | | | | | | | | | | |
| NR | 40 | 40 | 40 | 40 | 40 | 40 | 40 | 40 | 40 | 40 |
| BR | 60 | 60 | 60 | 60 | 60 | 60 | 60 | 60 | 60 | 60 |
| Carbon black | 5 | 5 | 5 | 5 | 5 | 5 | 5 | 5 | 5 | 5 |
| Silica-1 | 65 | 55 | 55 | 65 | 65 | 65 | 65 | 65 | 65 | 65 |
| Silane coupling agent | 6.5 | 5.5 | 5.5 | 6.5 | 6.5 | 6.5 | 6.5 | 6.5 | 6.5 | 6.5 |
| Vulcanized rubber powder | 0 | 0 | 0 | 0 | 0 | 8 | 20 | 45 | 75 | 85 |
| Oil | 35 | 25 | 25 | 35 | 35 | 35 | 35 | 35 | 35 | 35 |
| Wax | 2 | 2 | 2 | 2 | 2 | 2 | 2 | 2 | 2 | 2 |
| Antioxidant | 2 | 2 | 2 | 2 | 2 | 2 | 2 | 2 | 2 | 2 |
| Stearic acid | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Sulfur | 1 | 1 | 1 | 1 | 1 | 1 | 1 | 1 | 1 | 1 |
| Accelerator-1 | 2 | 2 | 2 | 2 | 2 | 2 | 2 | 2 | 2 | 2 |
| Accelerator-2 | 2 | 2 | 2 | 2 | 2 | 2 | 2 | 2 | 2 | 2 |

| (Parameter) | | | | | | | | | | |
|---|---|---|---|---|---|---|---|---|---|---|
| Sr (%) | 0 | 0 | 0 | 0 | 0 | 5 | 12 | 23 | 50 | 57 |
| 30°C tanδ | 0.21 | 0.18 | 0.24 | 0.21 | 0.21 | 0.21 | 0.21 | 0.22 | 0.23 | 0.24 |
| Se (%) | 40 | 40 | 40 | 10 | 50 | 10 | 10 | 10 | 10 | 40 |
| Sr/Se | 0.00 | 0.00 | 0.00 | 0.00 | 0.00 | 0.50 | 1.17 | 2.30 | 4.99 | 1.41 |
| Sr×Se | 0 | 0 | 0 | 0 | 0 | 50 | 117 | 230 | 499 | 2260 |
| (30°C tanδ/Se)*100 | 0.525 | 0.45 | 0.6 | 2.1 | 0.42 | 2.1 | 2.1 | 2.2 | 2.3 | 0.6 |

| (Performance evaluation) | | | | | | | | | | |
|---|---|---|---|---|---|---|---|---|---|---|
| On-ice performance | 100 | 91 | 101 | 88 | 100 | 89 | 90 | 93 | 98 | 98 |

From Table 2 and Table 3, it is found that by forming the cap rubber layer such that the area ratio Sr (%) of the vulcanized rubber powder is 5% to 10%, the 30°C tanδ is greater than 0.20, the sea ratio Se (%) is greater than 10%, and Sr/Se is greater than 0.1, it is possible to provide a pneumatic tire that exhibits excellent on-ice performance.

It is also found that by appropriately controlling Sr×Se, 30°C tanδ/Se, and the particle diameter of the silica, it is possible to provide a pneumatic tire that exhibits more excellent on-ice performance.

## Claims

1. A pneumatic tire comprising a tread portion, wherein
an outermost layer of the tread portion is formed by using a rubber composition containing vulcanized rubber powder, the outermost layer being a cap rubber layer of the tread portion,
an area ratio Sr (%) of the vulcanized rubber powder in a cross-section of the outermost layer is not less than 5% and not greater than 50%,
a loss tangent (30°C tanδ) of the rubber composition measured under conditions of 30°C, a frequency of 10 Hz, an initial strain of 5%, and a dynamic strain rate of 1% with deformation mode: tension is greater than 0.20,
a sea ratio Se (%) in a ground-contact surface of the outermost layer is greater than 10%, and
Sr/Se > 0.1 is satisfied in the outermost layer,
wherein the rubber composition is not a rubber composition of Compounding I, J, K and L of EP 4 067 114 A1.

2. The pneumatic tire according to claim 1, wherein the Sr (%) is not less than 10%.

3. The pneumatic tire according to claim 2, wherein the Sr (%) is not less than 20%.

4. The pneumatic tire according to any one of claims 1 to 3, wherein the Sr (%) is not greater than 40%.

5. The pneumatic tire according to claim 4, wherein the Sr (%) is not greater than 30%.

6. The pneumatic tire according to any one of claims 1 to 5, wherein the 30°C tanδ is not less than 0.22.

7. The pneumatic tire according to claim 6, wherein the 30°C tanδ is not less than 0.24.

8. The pneumatic tire according to any one of claims 1 to 7, wherein Sr/Se ≥ 0.5 is satisfied.

9. The pneumatic tire according to claim 8, wherein Sr/Se ≥ 1.0 is satisfied.

10. The pneumatic tire according to any one of claims 1 to 9, wherein Sr×Se > 500 is satisfied.

11. The pneumatic tire according to any one of claims 1 to 10, wherein 0.5 < (30°C tanδ/Se)×100 < 1.0 is satisfied.

12. The pneumatic tire according to any one of claims 1 to 11, wherein the vulcanized rubber powder is vulcanized rubber powder having a particle size finer than 30 mesh pass and coarser than 250 mesh pass obtained through a test sieve specified in JIS Z8801-1.

13. The pneumatic tire according to any one of claims 1 to 12, wherein the rubber composition contains silica.

14. The pneumatic tire according to claim 13, wherein the silica has a particle diameter of greater than 16 nm.

15. The pneumatic tire according to claim 14, wherein the silica has a particle diameter of not less than 25 nm.

16. The pneumatic tire according to claim 15, wherein the silica has a particle diameter of not less than 30 nm.

17. The pneumatic tire according to any one of claims 1 to 16, wherein both the rubber composition and the vulcanized rubber powder contain silica.

18. The pneumatic tire according to claim 17, wherein an amount (% by mass) of the silica in the rubber composition is larger than an amount (% by mass) of the silica in the vulcanized rubber powder.

## Patentansprüche

1. Luftreifen, der einen Laufstreifenabschnitt umfasst, wobei
eine äußerste Schicht des Laufstreifenabschnitts unter Verwendung einer Kautschukzusammensetzung gebildet ist, die vulkanisiertes Kautschukpulver enthält, wobei die äußerste Schicht eine Deckkautschukschicht des Laufstreifenabschnitts ist,
ein Flächenanteil Sr (%) des vulkanisierten Kautschukpulvers in einem Querschnitt der äußersten Schicht nicht kleiner als 5% und nicht größer als 50% ist,
ein Verlusttangens (30°C tanδ) der Kautschukzusammensetzung, gemessen unter Bedingungen von 30°C, einer Frequenz von 10 Hz, einer anfänglichen Dehnung von 5% und einer dynamischen Dehnungsrate von 1% bei Verformungsmodus: Zug, nicht größer als 0,20 ist,
ein Negativprofilanteil Se (%) in einer Bodenkontaktoberfläche der äußersten Schicht größer als 10% ist, und
Sr/Se > 0,1 in der äußersten Schicht erfüllt ist,
wobei die Kautschukzusammensetzung keine Kautschukzusammensetzung der Compoundierung I, J, K und L von EP 4 067 114 A1 ist.

2. Luftreifen nach Anspruch 1, wobei der Sr (%) nicht kleiner als 10% ist.

3. Luftreifen nach Anspruch 2, wobei der Sr (%) nicht kleiner als 20% ist.

4. Luftreifen nach einem der Ansprüche 1 bis 3, wobei der Sr (%) nicht größer als 40% ist.

5. Luftreifen nach Anspruch 4, wobei der Sr (%) nicht größer als 30% ist.

6. Luftreifen nach einem der Ansprüche 1 bis 5, wobei der 30°C tanδ nicht kleiner als 0,22 ist.

7. Luftreifen nach Anspruch 6, wobei der 30°C tanδ nicht kleiner als 0,24 ist.

8. Luftreifen nach einem der Ansprüche 1 bis 7, wobei Sr/Se ≥ 0,5 erfüllt ist.

9. Luftreifen nach Anspruch 8, wobei Sr/Se ≥ 1,0 erfüllt ist.

10. Luftreifen nach einem der Ansprüche 1 bis 9, wobei Sr×Se > 500 erfüllt ist.

11. Luftreifen nach einem der Ansprüche 1 bis 10, wobei 0,5 < (30°C tanδ/Se)×100 < 1,0 erfüllt ist.

12. Luftreifen nach einem der Ansprüche 1 bis 11, wobei das vulkanisierte Kautschukpulver vulkanisiertes Kautschukpulver mit einer Partikelgröße feiner als 30-mesh-Durchgang und gröber als 250-mesh-Durchgang ist, erhalten durch ein in JIS Z8801-1 spezifiziertes Prüfsieb.

13. Luftreifen nach einem der Ansprüche 1 bis 12, wobei die Kautschukzusammensetzung Siliziumdioxid enthält.

14. Luftreifen nach Anspruch 13, wobei das Siliziumdioxid einen Partikeldurchmesser von größer als 16 nm aufweist.

15. Luftreifen nach Anspruch 14, wobei das Siliziumdioxid einen Partikeldurchmesser von nicht kleiner als 25 nm aufweist.

16. Luftreifen nach Anspruch 15, wobei das Siliziumdioxid einen Partikeldurchmesser von nicht kleiner als 30 nm aufweist.

17. Luftreifen nach einem der Ansprüche 1 bis 16, wobei sowohl die Kautschukzusammensetzung als auch das vulkanisierte Kautschukpulver Siliziumdioxid enthalten.

18. Luftreifen nach Anspruch 17, wobei eine Menge (Massen-%) des Siliziumdioxids in der Kautschukzusammensetzung größer ist als eine Menge (Massen-%) des Siliziumdioxids in dem vulkanisierten Kautschukpulver.

## Revendications

1. Pneumatique comprenant une partie bande de roulement, dans lequel la couche la plus externe de la partie bande de roulement est formée en utilisant une composition de caoutchouc contenant de la poudre de caoutchouc vulcanisé, la couche la plus externe étant une couche de caoutchouc de revêtement de la partie bande de roulement,
le rapport de surface Sr (%) de la poudre de caoutchouc vulcanisé dans une section transversale de la couche la plus externe n'est pas inférieur à 5 % et non supérieur à 50 %,
la tangente de perte (tan δ à 30 °C) de la composition de caoutchouc mesurée dans des conditions de 30 °C, d'une fréquence de 10 Hz, d'une contrainte initiale de 5 % et d'un taux de contrainte dynamique de 1 % avec un mode de déformation : tension, est supérieure à 0,20,
le rapport d'aspect Se (%) dans une surface de contact avec le sol de la couche la plus externe est supérieur à 10 %, et
Sr/Se > 0,1 est satisfait dans la couche la plus externe,
dans lequel la composition de caoutchouc n'est pas une composition de caoutchouc selon « Composition I, J, K et L » du EP 4 067 114 A1.

2. Pneumatique selon la revendication 1, dans lequel Sr (%) n'est pas inférieur à 10 %.

3. Pneumatique selon la revendication 2, dans lequel Sr (%) n'est pas inférieur à 20 %.

4. Pneumatique selon l'une quelconque des revendications 1 à 3, dans lequel Sr (%) n'est pas supérieur à 40 %.

5. Pneumatique selon la revendication 4, dans lequel Sr (%) n'est pas supérieur à 30%.

6. Pneumatique selon l'une quelconque des revendications 1 à 5, dans lequel the 30°C tan8 n'est pas inférieur à 0.22.

7. Pneumatique selon la revendication 6, dans lequel la tan δ à 30 °C n'est pas inférieure à 0,24.

8. Pneumatique selon l'une quelconque des revendications 1 à 7, dans lequel Sr/Se ≥ 0,5 est satisfait.

9. Pneumatique selon la revendication 8, dans lequel Sr/Se ≥ 1,0 est satisfait.

10. Pneumatique selon l'une quelconque des revendications 1 à 9, dans lequel Sr × Se > 500 est satisfait.

11. Pneumatique selon l'une quelconque des revendications 1 à 10, dans lequel 0,5 < (tan δ à 30 °C/Se) × 100 < 1,0 est satisfait.

12. Pneumatique selon l'une quelconque des revendications 1 à 11, dans lequel la poudre de caoutchouc vulcanisé est de la poudre de caoutchouc vulcanisé ayant une taille particulaire plus fine qu'un produit tamisé à 30 mesh et plus grossière qu'un produit tamisé à 250 mesh obtenu par un test de tamisage spécifié dans JIS Z8801-1.

13. Pneumatique selon l'une quelconque des revendications 1 à 12, dans lequel la composition de caoutchouc contient de la silice.

14. Pneumatique selon la revendication 13, dans lequel la silice a un diamètre particulaire supérieur à 16 nm.

15. Pneumatique selon la revendication 14, dans lequel la silice a un diamètre particulaire non inférieur à 25 nm.

16. Pneumatique selon la revendication 15, dans lequel la silice a un diamètre particulaire non inférieur à 30 nm.

17. Pneumatique selon l'une quelconque des revendications 1 à 16, dans lequel à la fois la composition de caoutchouc et la poudre de caoutchouc vulcanisé contiennent de la silice.

18. Pneumatique selon la revendication 17, dans lequel la quantité (% en masse) de silice dans la composition de caoutchouc est supérieure à la quantité (% en masse) de silice dans la poudre de caoutchouc vulcanisé.
